# EUROPÄISCHE PATENTSCHRIFT

(11) **EP 0 950 550 B1**
(45) Veröffentlichungstag und Bekanntmachung des Hinweises auf die Patenterteilung: **28.05.2003**
(21) Anmeldenummer: 99104712.7
(22) Anmeldetag: 10.03.1999
(51) Int. Cl.: B60D 1/06

(54) **Fahrzeuganhängerkupplung mit Reibungsbremse**
Vehicle trailer hitch provided with a friction brake
Attelage de remorque avec frein à friction pour un véhicule

(30) Priorität: 16.04.1998 DE 19816751
(43) Veröffentlichungstag der Anmeldung: 20.10.1999
(73) Patentinhaber: Westfalia-Werke Knöbel GmbH & Co., 33378 Rheda-Wiedenbrück (DE)
(72) Erfinder: Braun, Dieter, Dipl.-Ing., 33378 Rheda-Wiedenbrück (DE); Kulak, Andreas, Dipl.-Ing., 33378 Rheda-Wiedenbrück (DE); Möller, Werner, DIpl.-Ing., 33442 Herzebrock-Clarholz (DE)
(74) Vertreter: Valentin, Ekkehard, Dipl.-Ing.

(56) Entgegenhaltungen:
- EP-A- 0 171 586
- EP-A- 0 320 202
- EP-A- 0 373 566
- CH-A- 161 714
- DE-U- 9 113 527
- FR-A- 1 001 072
- FR-A- 1 219 036

## Beschreibung

Die Erfindung bezieht sich auf eine Fahrzeuganhängerkupplung mit Reibungsbremse, bestehend aus einem auf die mit dem Fahrzeug verbundene Kupplungskugel aufsetz- und von dieser abhebbaren Kupplungstraggehäuse und einem Paar von jeweils eine kugelabschnittsförmige Reib-Andruckfläche aufweisenden, einander gegenüberliegenden Kuppelelementen, die von mechanisch bzw. druckhydraulisch über Handhebel betätigbaren Stellgliedern radial gegen die Kupplungskugel in Kupplungspositionen und aus diesen zurückbewegbar sind.

Eine Fahrzeuganhängerkupplung deiser gattung ist aus dem Dokument EP-A-0 320 202 bekannt geworden.

Mit Fahrzeuganhängerkupplungen dieser Art soll neben einer sicheren, den Beanspruchungen des Anhängerbetriebs, wie Anfahr- und Bremsstößen gewachsene, jedoch einfach und mit einem Handgriff herzustellende und zu lösende Verbindung zwischen Fahrzeug und Anhänger zusätzlich die Möglichkeit geschaffen werden, auftretende Gier-Nickund Wankbewegungen, sog. Schlingerbewegungen des Anhängers zu dämpfen.

Versuche, diesen Forderungen gerecht zu werden, führten zu unterschiedlichen Ausbildungsformen der Fahrzeuganhängerkupplungen. Neben Ausbildungsformen, bei denen im Kupplungstraggehäuse ein Kuppelelement durch einen, in dem Kupplungstraggehäuse über druckregelbare Stellelemente verschieb- und verriegelbarem Gleitteil beaufschlagt wird (DE-OS 35 11 301), wurde auch schon vorgeschlagen, hinter dem Kuppelelement ein aus Zylinder und Kolben bestehendes Hydraulikelement anzuordnen, das im Kupplungstraggehäuse längsverschieb- oder schwenkbar angeordnet, das Kuppelelement beaufschlagte (DE-PS 43 03 164). Ein weiterer Vorschlag ging dahin, im Kupplungstraggehäuse zwei einander gegenüberliegende, jeweils regelbar druckmittelbetätigbare Kuppelelemente vor und hinter der Kupplungskugel anzuordnen und eine zusätzliche mechanische Betätigungseinrichtung für das hinter der Kupplungskugel befindliche Kuppelelement vorzusehen (EP-OS 320 202).

Alle diese Ausbildungsformen bringen neben dem für ihre Herstellung erforderlichen technischen Aufwand zusätzlich den Nachteil mit sich, daß die beim Anhängerbetrieb über die Kuppelelemente auf die Kupplungskugel aufzubringenden unterschiedlichen Kräfte, nämlich die für die eigentliche Verriegelung des Kupplungstraggehäuses mit der Kupplungskugel und die für die Dosierung der Reibkräfte für die Bewegungsdämpfung, einander mehr oder weniger unkontrolliert überlagern.

Der Erfindung liegt die Aufgabe zugrunde, die bekannten Fahrzeuganhängerkupplungen so zu verbessern, daß neben einer festen Verriegelung der Kupplungskugel mit dem Kupplungstraggehäuse die dämpfenden Reibkräfte selbststeuernd dosiert und unter Anpassung an den Verschleiß aufgebracht werden können.

Diese Aufgabe wird dadurch gelöst, daß das mechanisch betätigbare Kuppelelement in Kuppelposition des Kupplungstraggehäuses mit der Kupplungskugel in einem, hinter der Kupplungskugel und das hydraulisch betätigbare Kuppelelement in einem, vor der Kupplungskugel befindlichen Abschnitt des Kupplungstraggehäuses angeordnet sind, wobei das hydraulisch betätigbare Kuppelelement mit einem druckhydraulischen Steueraggregat verbunden ist, das aus einem hydraulischen Geberzylinder und einer mit diesem über eine Druckausgleichswaage gekuppelten Gasfeder besteht, deren Wirkung auf das hydraulisch betätigte Kuppelelement das vorangegangene Einbringen des mechanisch betätigten Kuppelelements in Kupplungsposition mit der Kupplungskugel voraussetzt. Wie die Erfindung weiter vorsieht, kann die Anordnung dabei so getroffen werden, daß Geberzylinder und Gasfeder mit Abstand achsparallel nebeneinanderliegend in einer Wanne unterhalb des Kupplungstraggehäuses angeordnet sind, wobei die Kolbenstange des Geberzylinders und der Stützstößel der Gasfeder über einen die Ausgleichswaage bildenden Doppelarmhebel an ein, gemeinsam mittig zwischen beiden angeordnetes Schiebeglied angelenkt sind, das über einen, in der Wanne gelagerten äußeren Handhebel über Nocken- oder Schubstangengetriebe betätigbar ist. Das Schiebeglied kann dabei aus einem, auf oder in einer fest in der Wanne angeordneten Führung verschiebbaren Gleitelement bestehen, das mit dem Geberzylinder und der Gasfeder in einer gemeinsamen Achsebene liegt, und an dessen freiem Ende ein Paar von Doppelarmhebeln gelagert ist, deren Armenden an die freien Enden der Kolbenstange bzw. des Stütztößels von Geberzylinder bzw. Gasfeder angelenkt sind. Bei Verwendung von Reib-Trägern bzw. Reibbelägen auf den, die Kupplungskugel beaufschlagenden Kuppelelementen, werden, wie die Erfindung weiter vorschlägt, vorteilhaft für die Reib-Träger bzw. die Reibbeläge des vor der Kupplungskugel und des hinter der Kupplungskugel angeordneten Kuppelelements solche mit unterschiedlichen Reibungskoeffizienten und Verschleißstandzeiten verwendet. Der Reib-Träger bzw. der Reibbelag des hinter der Kupplungskugel angeordneten Kuppelelementes kann dabei vorteilhaft Standzeiten aufweisen, die um ein Mehrfaches größer sind als die des Reibbelages des vor der Kupplungskugel angeordneten Kuppelelementes, die Standzeiten können aber auch gleich groß bemessen sein. Der Reibbelag des hinter der Kupplungskugel angeordneten Kuppelelementes kann auch zur Vergrößerung der Reibfläche aufgeklebt sein.

Das vor der Kupplungskugel angeordnete, hydraulisch betätigbare Kuppelelement, das zweckmäßig einen im vorderen Abschnitt des Kupplungstraggehäuses angeordneten und geführten, einseitig druckbeaufschlagbaren Hydraulikkolben aufweist, kann erfindungsgemäß so ausgebildet sein, daß die der Kupplungskugel zugewandte Kreiswandfläche des Hydraulikkolbens auf die rückseitige Kreiswandfläche eines koaxial zu diesem im Kupplungstraggehäuse geführten zweiten scheibenkolbenförmigen Kuppelelements auflegbar ist, dessen Vorderseite den Reib-Träger einer kugelabschnittsförmigen Andruckfläche aufweist. Der Durchmesser des die scheibenkolbenförmige Andruckfläche aufweisenden Kuppelelements kann dabei kleiner bemessen sein als der des vor diesem angeordneten Hydraulikkolbens. Die dem scheibenkolbenförmigen Kuppelelement zugeordnete Kreiswandfläche des Hydraulikkolbens kann vorteilhaft in einer von einem Ringrand umgebenen axialzylindrischen Vertiefung verlaufen und die eine oder die andere der aufeinanderlegbaren Flächen des Hydraulikkolbens und/oder des scheibenförmigen Kuppelelements können eine leichte kugelabschnittsförmige konvexe Wölbung aufweisen. Beim Ankuppeln des Anhängers an das Zugfahrzeug mit Hilfe einer Fahrzeuganhängerkupplung der erfindungsgemäßen Bauform wird nach Aufsetzen des Kupplungstraggehäuses auf die Kupplungskugel zunächst in bekannter Weise das mechanisch betätigbare Kuppelelement gegen die Kupplungskugel gedrückt und in dieser Position automatisch verriegelt. Anschließend wird die druckhydraulische Steuereinrichtung, z.B. durch Schwenken eines Hebeltriebs, um ein einstellbares Maß vorgespannt, wobei die dabei über die Ausgleichswaage erzielten Bewegungen der Kolbenstange des Geberzylinders und des Stößels der Gasfeder bewirken, daß über den Geberzylinder das hydraulisch betätigbare Kuppelelement druckbeaufschlagt und gleichzeitig die Gasfeder vorgespannt werden. Die Gasfeder fängt dann einmal die fahrbetriebsbedingten Druckmittelrückstöße aus dem Kuppelelement ausgleichend ab und dient gleichzeitig als Kraft-Weg-Reservespeicher für den Nachspannungsbedarf, der sich aus dem Reibbelagsverschleiß ergibt. Das Dämpfungsmoment dieser Fahrzeuganhängerkupplung bleibt deshalb auch unabhängig vom Verschleiß der Reibbeläge erhalten.

Die Erfindung wird anhand des in der Zeichnung dargestellten Ausführungsbeispiels näher erläutert. In der Zeichnung zeigen
- Fig. 1: die Fahrzeuganhängerkupplung von der Seite gesehen,
- Fig. 2: einen axialen Längsschnitt durch Fig. 1,
- Fig. 3: einen Teilausschnitt aus Fig. 2,
- Fig. 4: die Draufsicht auf Fig. 3,
- Fig. 5: einen Schnitt nach der Linie A-A durch Fig. 3,
- Fig. 6: einen weiteren Schnitt nach der Linie B-B durch Fig. 3, teilweise gebrochen,
- Fig. 7: eine andere Ausbildungsform entsprechend der Darstellung nach Fig. 3,
- Fig. 8: die Draufsicht auf Fig. 7 und
- Fig. 9: die Darstellung nach Fig. 7 in einer anderen Bewegungsphase.

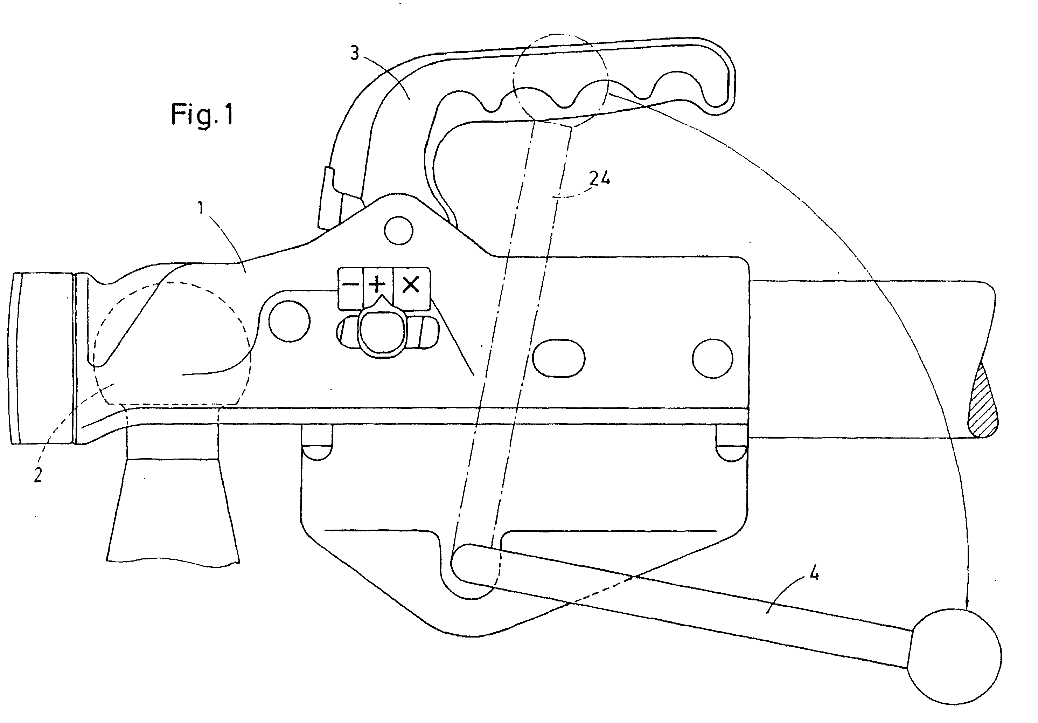

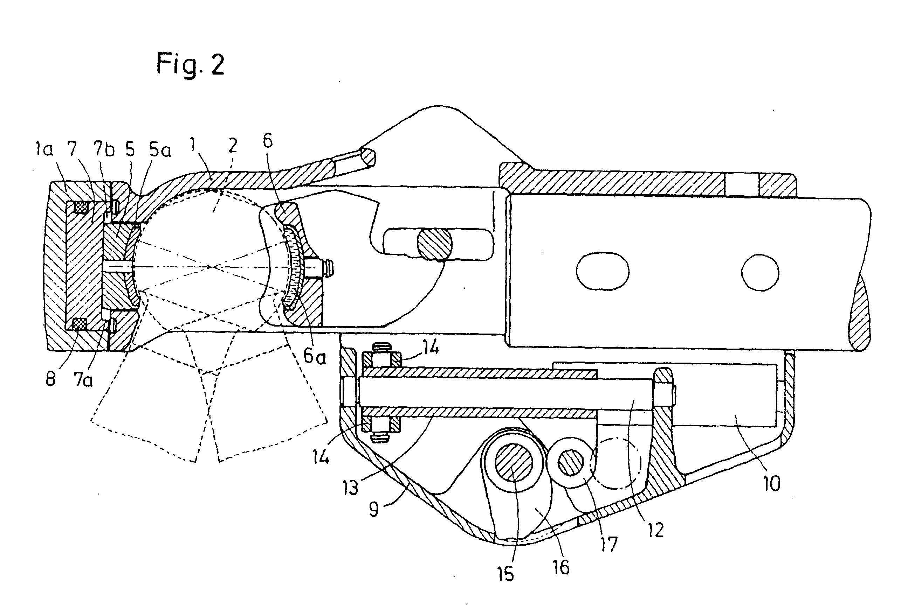

Wie aus Fig. 1 zu ersehen, weist die Fahrzeuganhängerkupplung ein Kupplungstraggehäuse 1 auf, das hier auf die Kupplungskugel 2 aufgesetzt ist. Im oberen Teil des Gehäuses ist ein Zughebel 3 eingesetzt und angelenkt, mit dem der hier nicht dargestellte Zugkupplungsverschluß der Zugkugelkupplung gelöst werden kann. Im unteren Bereich des Kupplungstraggehäuses 1 ist ein Bedienhebel für das anschließend noch näher erläuterte druckhydraulische Steueraggregat überlagert. Im Kupplungstraggehäuse 1 sind, wie Fig. 2 zeigt, im auf die Kupplungskugel 2 aufgesetzten Zustand vor dieser ein Kuppelelement 5 und hinter dieser ein weiteres Kuppelelement 6 angeordnet. Das hinter der Kupplungskugel 2 angeordnete Kuppelelement 6 weist einen Reib-Träger 6a mit kugelabschnittsförmiger Andruckfläche auf und ist über die nicht dargestellte, mit dem Zughebel 3 verbundene Zugkupplungseinrichtung in seine dargestellte, die Kupplungskugel 2 beaufschlagende Position einbring- und verriegelbar.

Das Kuppelelement 5 weist ebenfalls einen Reib-Träger 5a mit kugelabschnittsförmiger Andruckfläche auf und ist als im Kupplungstraggehäuse 1 axial verschiebbarer zylindrischer Scheibenkolben ausgebildet. Die der Kupplungskugel 2 abgewandte Kreiswandfläche dieses Scheibenkolbens wird von einem Hydraulikkolben 7 beaufschlagt, der in dem zylindrisch ausgebildeten Vorderteil 1a des Kupplungstraggehäuses 1 geführt und mit einer Ringdichtung 8 gegen diesen abgedichtet ist. Der Durchmesser des scheibenkolbenförmigen Kuppelelementes 5 ist hier kleiner bemessen als der des Hydraulikkolbens 7, und die Andruckfläche dieses Hydraulikkolbens liegt in einer, von einem Ringrand 7a umgebenen axialzylindrischen Vertiefung 7b.

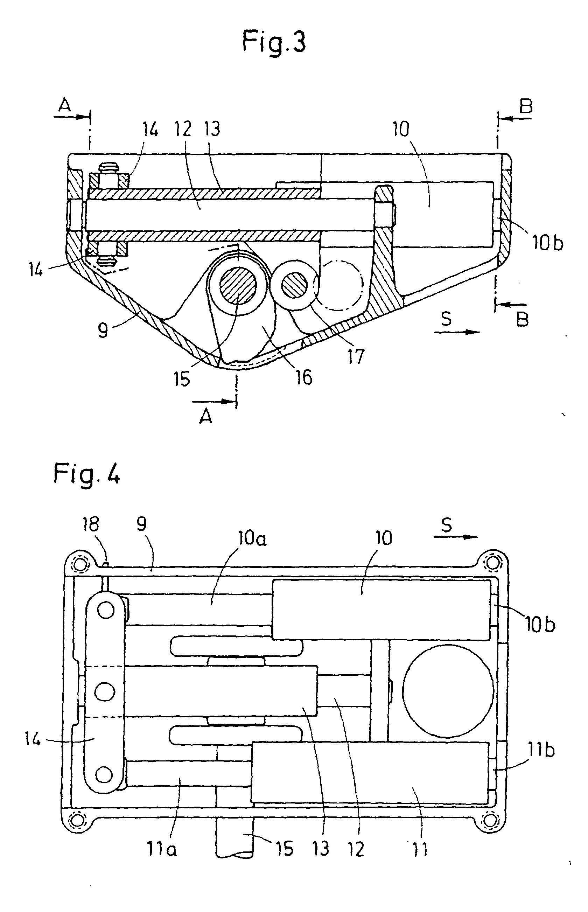

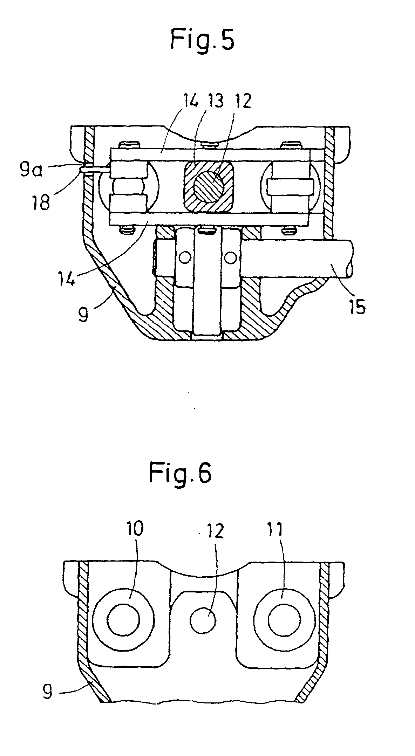

Das durch den zylindrischen Vorderteil 1a des Kupplungstraggehäuses 1 und den Hydraulikkolben 7 gebildete Kolben-Zylinder-Aggregat ist auf nicht dargestellte Weise mit einem druckhydraulischen Steueraggregat verbunden, das hier in einem Ansatz in der Form einer Wanne 9 im unteren Bereich des Kupplungstraggehäuses 1 angeordnet ist. Dieses Steueraggregat besteht (vgl. auch Fig. 3 bis 6) aus einem Geberzylinder 10 und einer Gasfeder 11, die in einer gemeinsamen Achsebene, mit Abstand nebeneinanderliegend, in der Wanne 9 befestigt sind. Mittig zwischen Geberzylinder 10 und Gasfeder 11 ist, ebenfalls in der Wanne 9 befestigt, eine, hier aus einem Zylinderstab 12 bestehende Führung, angeordnet, auf der ein, hier als Rohr 13 ausgebildetes Gleitstück, verschiebbar ist. Am freien Ende dieses Rohres 13 ist ein übereinanderliegendes Paar von Doppelarmhebeln 14 drehbar gelagert. Mit dem einen Ende dieses Doppelarmhebelpaares 14 ist das freie Ende der Kolbenstange 10a des Geberzylinders 10 gelenkig verbunden und mit dem anderen Ende das freie Ende des Stützstößels 11a der Gasfeder 11.

Auf der in der Wanne 9 gelagerten Welle 15 des in Fig. 1 wiedergegebenen Bedienhebels 4 sitzt eine Nocke 16, die einen unter dem Rohr 13 angeordneten Mitnahmeansatz 17 beaufschlagt. Durch Verschwenken des Bedienhebels 4 nach links läßt sich mit Hilfe der Nocke 16 und des Mitnahmeansatzes 17 das Rohr 13 in Richtung des Pfeils S nach hinten verschieben. Diese Verschiebung wird über das Doppelarmhebelpaar 14 und die angelenkte Kolbenstange 10a bzw. den angelenkten Stützstößel 11a auf den Geberzylinder 10 und die Gasfeder 11 übertragen. Der Geberzylinder 10 gibt dabei ein Teilvolumen des Druckmittels an das vom Hydraulikkolben 7 und dem zylindrischem Vorderteil 1a des Kupplungstraggehäuses 1 gebildeten Kolben-Zylinder-Aggregates ab und spannt die Gasfeder 11 vor. Das Doppelhebelpaar 14 bildet dabei zwischen Geberzylinder 10 und Gasfeder 11 eine Druck-Ausgleichswaage, deren Position durch einen an einem Ende des Doppelhebelarmpaares 14 angeordneten Anzeigestift 18, der aus einem Schlitz 9a in der Wanne 9 ragend, von außen erkennbar, den Reibverschleiß anzeigt. Die geschlossenen Enden des Geberzylinders 10 und der Gasfeder 11 weisen Zapfen 10b bzw. 11b auf, die mit Spiel in Bohrungen der Wanne 9 eingesteckt sind und damit Geberzylinder 10 und Gasfeder 11 mit Bezug auf die Anlenkung von Kolbenstange 10a bzw. Stiftstößel 11a an das die Druckwaage darstellende Doppelhebelarmpaar 14 eine eingeschränkte Beweglichkeit verschaffen.

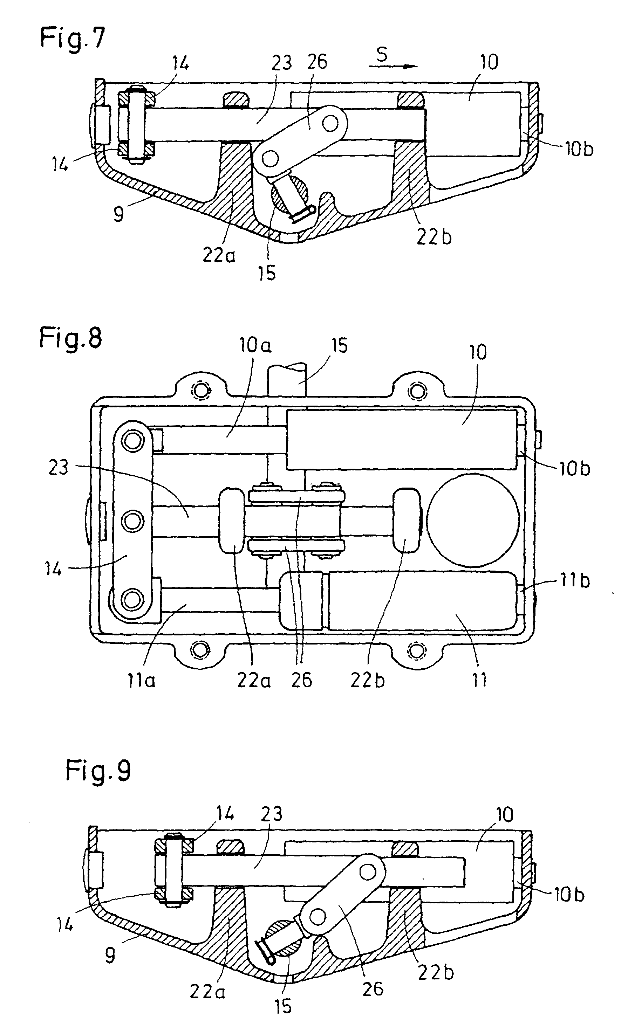

Bei der Ausbildung nach den Fig. 7 bis 9 besteht das Gleitstück aus einer Schubstange 23, die in Tragböcken 22a und 22b der Wanne 9 axial gleitend geführt, über eine Lenkerlasche 26 mit der Welle 15 des, in Fig. 1 strichpunktiert angedeuteten Handhebels 24 verbunden ist. An einem freien Ende der Schubstange 23 ist, wie beim vorher beschriebenen Ausführungsbeispiel (Fig. 8), ebenfalls ein übereinanderliegendes Paar von Doppelarmhebeln 15 drehbar gelagert. Mit dem einen Ende dieses Doppelarmhebelpaares 14 ist das freie Ende der Kolbenstange 10a des Geberzylinders 10 gelenkig verbunden, und mit dem anderen Ende das freie Ende des Stützstößels 11a der Gasfeder 11.

Durch Schwenken des Handhebels 24 aus der in Fig. 1 wiedergegebenen Position nach rechts wird die Schubstange 23 mit Hilfe der Lenkerlasche 26 in Richtung des Pfeils S (Fig. 7) nach hinten verschoben und diese Verschiebung entsprechend, über das Doppelarmhebelpaar 14 und die angelenkte Kolbenstange 10a bzw. den angelenkten Stützstößel 11a auf den Geberzylinder 10 und die Gasfeder 11 übertragen.

### Bezugszeichenliste

- 1: Kupplungstraggehäuse
- 1a: zylindrischer Vorderteil (des Kupplungstraggehäuses)
- 2: Kupplungskugel
- 3: Zughebel
- 4: Handhebel
- 5: Kuppelelement
- 5a: Reib-Träger (der Andruckfläche des Kuppelelements)
- 6: Kuppelelement
- 6a: Reib-Träger
- 7: Hydraulikkolben
- 7a: Ringrand
- 7b: axialzylindrische Vertiefung
- 8: Ringdichtung
- 9: Wanne
- 9a: Schlitz (in der Wanne)
- 10: Geberzylinder
- 10a: Kolbenstange (des Geberzylinders)
- 10b: Zapfen (des Geberzylinders)
- 11: Gasfeder
- 11a: Stützstößel (der Gasfeder)
- 11b: Zapfen (der Gasfeder)
- 12: zylindrischer Stab
- 13: Rohr
- 14: Doppelarmhebel
- 15: Welle
- 16: Nocke
- 17: Mitnahmeansatz
- 18 20 21: Anzeigestift
- 22a, 22b: Tragböcke
- 23: Schubstange
- 24 25: Handhebel
- 26: Lenkerlasche

## Patentansprüche

1. Fahrzeuganhängerkupplung mit Reibungsbremse, bestehend aus einem, auf die mit dem Fahrzeug verbundene Kupplungskugel (2) aufsetz- und von dieser abhebbaren Kupplungstraggehäuse (1) und einem Paar, von jeweils eine kugelabschnittsförmige Reib-Andruckfläche aufweisenden, einander gegenüberliegenden Kuppelelementen (5, 6), die von mechanisch bzw. druckhydraulisch über Handhebel (4) betätigbaren Stellgliedern radial gegen die Kupplungskugel in Kupplungspositionen und aus diesen zurückbewegbar sind,
**dadurch gekennzeichnet,**
**daß** das mechanisch betätigbare Kuppelelement (6) in Kuppelposition des Kupplungstraggehäuses (1) mit der Kupplungskugel (2) in einem hinter der Kupplungskugel (2) und das hydraulisch betätigbare Kuppelelement (5) in einem vor der Kupplungskugel befindlichen Abschnitt des Kupplungstraggehäuses angeordnet sind, wobei das hydraulisch betätigbare Kuppelelement (5) mit einem druckhydraulischen Steueraggregat verbunden ist, das aus einem Hydraulikgeberzylinder (10) und einer mit diesem über eine Druckausgleichswaage (14) gekuppelten Gasfeder (11) besteht, deren Wirkung auf das hydraulisch betätigbare Kuppelelement (5) das vorangegangene Einbringen des mechanisch betätigbaren Kuppelelements (6) in Kupplungsposition mit der Kupplungskugel (2) voraussetzt.

2. Fahrzeuganhängerkupplung nach Anspruch 1,
**dadurch gekennzeichnet,**
**daß** Geberzylinder (10) und Gasfeder (11) mit Abstand achsparallel nebeneinanderliegend, in einer Wanne (9) unterhalb des Kupplungstraggehäuses (1) angeordnet sind, wobei die Kolbenstange (10a) des Geberzylinders (10) und der Stützstößel (11a) der Gasfeder (11) über einen, die Ausgleichswaage (14) bildenden Doppelarmhebel (14) an ein, gemeinsam mittig zwischen beiden angeordnetes Schiebeglied (13) angelenkt sind, das über einen, in der Wanne (9) gelagerten äußeren Handhebel (4; 24) über Nocken- oder Schubstangentriebe (16, 17; 26) betätigbar ist.

3. Fahrzeuganhängerkupplung nach den Ansprüchen 1 und/oder 2,
**dadurch gekennzeichnet,**
**daß** das Schiebeglied (13) aus einem, auf oder in einer fest in der Wanne (9) angeordneten Führung (12; 22a, 22b) verschiebbaren Gleitelement (13; 23) besteht, das mit dem Geberzylinder (10) und der Gasfeder (11) in einer gemeinsamen Achsebene liegt, und an dessen freiem Ende ein Paar von Doppelarmhebeln (14) gelagert ist, deren Armenden an die freien Enden der Kolbenstange (10a) bzw. des Stützstößels (11a) von Geberzylinder (10) bzw. Gasfeder (11) angelenkt sind.

4. Fahrzeuganhängerkupplung nach einem der Ansprüche 1 bis 4, bei der das hydraulisch betätigbare Kuppelelement einen, im vorderen Abschnitt des Kupplungstraggehäuses angeordneten und geführten, einseitig druckbeaufschlagbaren Hydraulikkolben aufweist,
**dadurch gekennzeichnet,**
**daß** die der Kupplungskugel (2) zugewandte Kreiswandfläche des Hydraulikkolbens (7) auf die rückseitige Kreiswandfläche eines koaxial zu diesem im Kupplungstraggehäuse (1) geführten zweiten scheibenkolbenförmigen Kuppelelements (5) auflegbar ist, dessen Vorderseite den Reib-Träger (5a) einer kugelabschnittsförmigen Andruckfläche aufweist.

5. Fahrzeuganhängerkupplung nach Anspruch 4,
**dadurch gekennzeichnet,**
**daß** der Durchmesser des die scheibenkolbenförmigen Andruckflächen aufweisenden Kuppelelements (5) kleiner bemessen ist, als der des vor diesem angeordneten Hydraulikkolbens (7).

6. Fahrzeuganhängerkupplung nach Anspruch 5,
**dadurch gekennzeichnet,**
**daß** die dem scheibenkolbenförmigen Kuppelelement (5) zugewandte Kreiswandfläche des Hydraulikkolbens (7) in einer von einem Ringrand (7a) umgebenen axialzylindrischen Vertiefung (7b) verläuft.

7. Fahrzeuganhängerkupplung nach einem oder mehreren der Ansprüche 4 bis 6,
**dadurch gekennzeichnet,**
**daß** die eine oder die andere der aufeinanderlegbaren Flächen des Hydraulikkolbens (7) und/oder des scheibenförmigen Kuppelelements (5) eine leichte kugelabschnittsförmige konvexe Wölbung aufweist.

8. Fahrzeuganhängerkupplung nach einem oder mehreren der Ansprüche 1 bis 7,
bei der auf die Kupplungskugel beaufschlagende Kuppelelemente Reib-Träger bzw. Reibbeläge aufbringbar sind,
**dadurch gekennzeichnet,**
**daß** die Reib-Träger bzw. Reibbeläge des, vor der Kupplungskugel (2) und des hinter der Kupplungskugel angeordneten Kuppelelements (5 bzw. 6) unterschiedliche Reibungskoeffizienten und Verschleißstandzeiten aufweisen.

9. Fahrzeuganhängerkupplung nach Anspruch 8,
**dadurch gekennzeichnet,**
**daß** der Reib-Träger (6a) bzw. Reibbelag des hinter der Kupplungskugel (2) angeordneten Kuppelelements (6) Standzeiten aufweist, die um ein Mehrfaches größer sind als die des vor der Kupplungskugel (2) angeordneten Kuppelelementes (5).

10. Fahrzeuganhängerkupplung nach einem oder mehreren der Ansprüche 1 bis 7,
**dadurch gekennzeichnet,**
**daß** die Reib-Träger bzw. Reibbeläge (5a; 6a) des vor der Kupplungskugel (2) und des hinter der Kupplungskugel angeordneten Kuppelelementes (5 bzw. 6) gleich große Reibungskoeffizienten und Verschleißstandzeiten aufweisen.

11. Fahrzeuganhängerkupplung nach einem der Ansprüchen 8 bis 10,
**dadurch gekennzeichnet,**
**daß** die Reibbeläge der Kuppelelemente (6 und/oder 5) auf deren Reibträger (6a und/oder 5a) aufgeklebt sind.

## Claims

1. A trailer coupling with friction brake for motor vehicles, consisting of a coupling support housing (1) that can be attached to and detached from the hitch ball (2) connected to the motor vehicle, and of a pair of oppositely arranged coupling elements (5, 6) that are respectively provided with a friction pressing surface in the shape of a spherical segment, wherein the coupling elements can be radially displaced relative to the hitch ball into coupling positions and out of said coupling positions by means of adjusting elements that are respectively actuated mechanically and hydraulically by means of hand levers (4),
**characterized by** the fact that,
in the coupled position of the coupling support housing (1) and the hitch ball (2), the mechanically actuated coupling element (6) is arranged in a section of the coupling support housing which lies behind the hitch ball (2) and the hydraulically actuated coupling element (5) is arranged in a section of coupling support housing which lies in front of the hitch ball, wherein the hydraulically actuated coupling element (5) is connected to a hydraulic pressure control unit that consists of a hydraulic master cylinder (10) and a pneumatic spring (11) that this coupled to the hydraulic master cylinder via a pressure compensation element (14), and wherein the pneumatic spring only acts upon the hydraulically actuated coupling element (5) once the mechanically actuated coupling element (6) and the hitch ball (2) are in the coupled position.

2. The trailer coupling for motor vehicles according to Claim 1,
**characterized by** the fact that
the master cylinder (10) and the pneumatic spring (11) are arranged axially parallel to one another in a trough (9) underneath the coupling support housing (1) such that they are spaced apart from one another, wherein the piston rod (10a) of the master cylinder (10) and the strut (11a) of the pneumatic spring (11) are coupled to a sliding element (13) arranged centrally in between the piston rod and the strut by means of a double-armed lever (14) that forms the compensation element (14), and wherein said sliding element can be actuated by means of an outer hand lever (4; 24) that is arranged in the trough (9) and acts upon cam or push rod drives (16, 17; 26).

3. The trailer coupling for motor vehicles according to Claim 1 and/or 2,
**characterized by** the fact that
the sliding element (13) consists of a gliding element (13; 23) that can be displaced on or in a guide (12; 22a, 22b) rigidly arranged in the trough (9) and lies in the same axial plane as the master cylinder (10) and the pneumatic spring (11), wherein a pair of double-armed levers (14) is supported on the free end of the gliding element, and wherein the arm ends of the double-armed levers are respectively coupled to the free ends of the piston rod (10a) and the strut (11a) of the master cylinder (10) and the pneumatic spring (11).

4. The trailer coupling for motor vehicles according to one of Claims 1-4, wherein the hydraulically actuated coupling element comprises a hydraulic piston that is arranged and guided in the front section of the coupling support housing and can be subjected to pressure on one side,
**characterized by** the fact that
the circular wall surface of the hydraulic piston (7) which faces the hitch ball (2) can be placed against the rear circular wall surface of a second coupling element (5) that has the shape of a disk piston and is guided coaxially to the hydraulic piston in the coupling support housing (1), wherein the front side of this second coupling element is provided with the friction carrier (5a) of a pressing surface in the shape of a spherical segment.

5. The trailer coupling for motor vehicles according to Claim 4,
**characterized by** the fact that
the diameter of the coupling element (5) with the pressing surfaces in the shape of disk pistons is smaller than that of the hydraulic piston (7) arranged in front thereof.

6. The trailer coupling for motor vehicles according to Claim 5,
**characterized by** the fact that
the circular wall surface of the hydraulic piston (7) which faces the coupling element (5) in the form of a disk piston extends in an axially cylindrical depression (7b) that is surrounded by an annular edge (7a).

7. The trailer coupling for motor vehicles according to at least one of Claims 4-6,
**characterized by** the fact that
the surface of the hydraulic piston (7) and/or the surface of the disk-shaped coupling element (5) which can be placed against one another has/have a slight convex curvature in the form of a spherical segment.

8. The trailer coupling for motor vehicles according to at least one of Claims 1-7, wherein friction carriers and friction linings can be applied onto the coupling elements that act upon the hitch ball,
**characterized by** the fact that
the friction carriers or friction linings of the respective coupling elements (5 and 6) arranged in front of and behind the hitch ball (2) have different coefficients of friction and wear-related service lives.

9. The trailer coupling for motor vehicles according to Claim 8,
**characterized by** the fact that
the friction carriers (6a) or friction linings of the coupling element (6) arranged behind the hitch ball (2) have service lives that are several times greater than those of the coupling element (5) arranged in front of the hitch ball (2).

10. The trailer coupling for motor vehicles according to at least one of Claims 1-7,
**characterized by** the fact that
the friction carriers or friction linings (5a; 6a) of the respective coupling elements (5 and 6) arranged in front of and behind the hitch ball (2) have the same coefficient of friction and the same wear-related service lives.

11. The trailer coupling for motor vehicles according to one of Claims 8-10,
**characterized by** the fact that
the friction linings of the coupling elements (5 and/or 6) are bonded onto their respective friction carriers (6a and/or 5a).

## Revendications

1. Attelage pour remorque de véhicule comportant un frein à friction, consistant en un boîtier support d'attelage (1) pouvant être posé sur la boule d'attelage reliée au véhicule et être retiré de celle-ci et en une paire d'éléments d'attelage (5, 6) placés les uns en face des autres et présentant respectivement une surface de compression à friction en forme de segment de sphère, qui peuvent être ramenés par l'intermédiaire d'éléments de réglage actionnables mécaniquement ou par pression hydraulique au moyen de leviers manuels (4) radialement contre les boules d'attelage vers des positions d'attelage et en partant de celles-ci,
**caractérisé en ce que**
l'élément d'attelage actionnable mécaniquement (6), en position d'attelage du boîtier support d'attelage (1) avec la boule d'attelage (2), est disposé dans un élément d'attelage se trouvant derrière la boule d'attelage (2) et l'élément d'attelage actionnable par hydraulique (5) dans une section du boîtier support d'attelage se trouvant devant la boule d'attelage, l'élément d'attelage actionnable par hydraulique (5) étant relié à un agrégat de commande à pression hydraulique qui consiste en un vérin distributeur hydraulique (10) et en un ressort à gaz (11) couplé avec celui-ci par l'intermédiaire d'une balance de compensation de pression (14), dont l'effet sur l'élément d'attelage actionnable hydrauliquement (5) suppose le positionnement préalable de l'élément d'attelage actionnable mécaniquement (6) en position de couplage avec la boule d'attelage (2).

2. Attelage pour remorque de véhicule selon la revendication 1,
**caractérisé en ce que**
le vérin distributeur (10) et le ressort à gaz (11) sont disposés à distance l'un prés de l'autre parallèlement à l'axe dans une cuvette (9) en dessous du boîtier support d'attelage (1), la bielle de piston (10a) du vérin distributeur (10) et le poussoir de soutien (11a) du ressort à gaz (11) étant articulés ensemble par l'intermédiaire d'un levier à double bras (14) formant la balance de compensation (14), sur un élément coulissant (13) disposé au centre entre eux deux, qui est actionnable au moyen d'un levier manuel externe (4 ; 24) placé dans la cuvette (9) par l'intermédiaire de transmissions à cames ou à bielles (16, 17 ; 26).

3. Attelage pour remorque de véhicule selon les revendications 1 et/ou 2,
**caractérisé en ce que**
l'élément coulissant (13) consiste en un élément glissant (13 ; 23) déplaçable sur ou dans un guide (12 ; 22a, 22b) disposé fixement dans la cuvette (9) qui se situe avec le vérin distributeur (10) et le ressort à gaz (11) dans un plan d'axe commun, et qu'à son extrémité libre est installée une paire de leviers à double bras (14) dont les extrémités de bras sont articulées aux extrémités libres de la bielle de piston (10a) ou du poussoir de soutien (11a) du cylindre distributeur (10) ou du ressort à gaz (11).

4. Attelage pour remorque de véhicule selon une des revendications 1 à 3, dans lequel l'élément d'attelage actionnable par hydraulique présente un piston hydraulique guidé, pouvant recevoir de la pression d'un côté, disposé dans la section avant du boîtier support d'attelage,
**caractérisé en ce que**
la surface de paroi circulaire du piston hydraulique (7) tournée vers la boule d'attelage (2) peut être posée sur la surface de paroi circulaire arrière d'un deuxième élément d'attelage en forme de piston (5) guidé coaxialement par rapport à celui-ci dans le boîtier support d'attelage (1), dont la face avant présente le support à friction (5a) d'une surface de compression en forme de segment de sphère.

5. Attelage pour remorque de véhicule selon la revendication 4,
**caractérisé en ce que**
le diamètre de l'élément d'attelage (5) présentant les surfaces de compression en forme de segment de sphère est de dimensions inférieures à celles du piston hydraulique (7) disposé devant celui-ci.

6. Attelage pour remorque de véhicule selon la revendication 5,
**caractérisé en ce que**
la surface de paroi circulaire tournée vers l'élément d'attelage en forme de piston (5) du piston hydraulique (7) s'étend dans un renfoncement (7b) axialement cylindrique entouré par une bordure annulaire (7a).

7. Attelage pour remorque de véhicule selon une ou plusieurs des revendications 4 à 6,
**caractérisé en ce que**
l'une ou l'autre des surfaces superposables du piston hydraulique (7) et/ou de l'élément d'attelage en forme de piston (5) présente un léger bombement convexe en forme de segment de sphère.

8. Attelage pour remorque de véhicule selon une ou plusieurs des revendications 1 à 7, dans lequel des supports à friction ou revêtements à friction peuvent être installés sur les éléments d'attelage venant en contact avec la boule d'attelage,
**caractérisé en ce que**
les supports à friction ou revêtements à friction de l'élément d'attelage disposé devant la boule d'attelage (2) et de celui disposé derrière la boule d'attelage (5 ou 6) présentent des coefficients de friction et durées de résistance à l'usure différents.

9. Attelage pour remorque de véhicule selon la revendication 8,
**caractérisé en ce que**
le support à friction (6a) ou revêtement à friction de l'élément d'attelage (6) disposé derrière la boule d'attelage (2) présente des durées de résistance qui sont de multiples fois plus longues que celles de l'élément d'attelage (5) disposé devant la boule d'attelage (2).

10. Attelage pour remorque de véhicule selon une ou plusieurs des revendications 1 à 7,
**caractérisé en ce que**
les supports à friction ou revêtements à friction (5a ; 6a) de l'élément d'attelage (5 ou 6) disposé devant la boule d'attelage (2) et de celui disposé derrière la boule d'attelage (5 ou 6) présentent des coefficients de friction et des temps de résistance à l'usure identiques.

11. Attelage pour remorque de véhicule selon une ou plusieurs des revendications 8 à 10,
**caractérisé en ce que**
les revêtements à friction des éléments d'attelage (6 et/ou 5) sont collés sur leurs supports à friction (6a et/ou 5a).
